# EUROPÄISCHE PATENTSCHRIFT

(11) **EP 3 109 788 B1**
(45) Veröffentlichungstag und Bekanntmachung des Hinweises auf die Patenterteilung: **26.08.2020**
(21) Anmeldenummer: 15173096.7
(22) Anmeldetag: 22.06.2015
(51) Int. Cl.: G06F 21/53, G06F 9/455

(54) **MIKROKERN-BASIERTE NUTZERUMGEBUNG, NETZWERKARCHITEKTUR UND SICHERES BACKEND ZUR VERHINDERUNG VON INFORMATIONSVERLUST**
MICRO-CORE BASED USER ENVIRONMENT, NETWORK ARCHITECTURE AND SECURE BACK END FOR PREVENTING INFORMATION LOSS
ENVIRONNEMENT UTILISATEUR À BASE DE MICRO-NOYAU, ARCHITECTURE RÉSEAU ET BACK-END SÉCURISÉ POUR LA PRÉVENTION DE PERTES D'INFORMATION

(43) Veröffentlichungstag der Anmeldung: 28.12.2016
(73) Patentinhaber: Deutsche Telekom AG, 53113 Bonn (DE)
(72) Erfinder: Peylo, Christoph, 49401 Damme (DE); Schmidt, Aubrey-Derrick, 10439 Berlin (DE); Seifert, Jean-Pierre, 10587 Berlin (DE)
(74) Vertreter: Vossius & Partner Patentanwälte Rechtsanwälte mbB

(56) Entgegenhaltungen:
- US-A1- 2008 016 313
- US-A1- 2012 272 240

## Beschreibung

Die Erfindung betrifft eine Nutzerumgebung zur Verwendung in einer Netzwerkarchitektur und eine entsprechende Netzwerkarchitektur und ein entsprechendes sicheres Backend.

Information-Leakage, d.h. ungewollte Informationsweitergabe in eigentlich abgesicherten Systemen, ist ein klassisches Problem der Informationssicherheit, welches bisher nur beschränkt lösbar ist. Eine der Hauptquellen für die ungewollte Informationsweitergabe ist dabei der berechtigte Nutzer, der sensible, vertrauliche und/oder klassifizierte Daten beabsichtigt oder unbeabsichtigt an unberechtigte Dritte weitergibt.

Aus dem Stand der Technik bekannte Gegenmaßnahmen greifen auf organisatorischer und technischer Ebene ein:
a) Organisatorisch:
   ▪ Richtlinien bzw. Policies definieren den Umgang mit Informationen, werden aber durch einfaches Nichtbefolgen nutzlos bzw. wirkungslos, wenn das Nichtbefolgen unerkannt bleibt.
   ▪ Klassifizierung stellt ebenfalls ein organisatorisches Mittel zur Bekämpfung von Information-Leakage dar, da Daten entsprechend ihrer Bedeutung in Kategorien eingeordnet werden, für welche unterschiedliche Berechtigungsgruppen und Verhaltensvorgaben definiert werden.
   ▪ Zugangskontrollmechanismen verhindern physikalischen Zugriff auf schützenswerte Informationen.
b) Technisch:
   ▪ Identity-Management-Architekturen und Access-Control Systeme kontrollieren und gewähren Zugriff auf beschränkte Ressourcen. Die Separierung in Domänen hilft hierbei, die Kontrolle über Informationen verwaltbar zu machen.
   ▪ Verschlüsselung verhindert, dass Dritte unberechtigt Zugriff auf Inhalte bekommen.
   ▪ Trusted Computing Plattformen (TCP) versuchen hardwareseitig für Beschränkungen zu sorgen, indem vertrauenswürdige Komponenten Zugriff auf sensible Operationen kontrollieren. Hauptfunktionen der TCPs können in der Identifikation von (Hardware)-Umgebungen und dem Schutz von kryptographischen Materialien gesehen werden.

Ein Nachteil des Standes der Technik ist allerdings, dass der Nutzen und die Funktionalität dieser organisatorischen und technischen Gegenmaßnahmen gegen Information-leakage durch Nutzerfehlverhalten ausgehebelt werden kann.

Dies wird durch Studien (2007) unterstrichen, welche die Hauptgründe für vorsätzlichen Information Leakage in "undisziplinierten Mitarbeitern" (77%) und "böswilligen Absichten" (23%) sehen (siehe Referenz [1]).

Die anderen Fälle betreffen Informationsschnittstellen von Computersystemen, welche dem Nutzer unter anderem durch USB-Konnektivität, Web-Konnektivität oder Email-Anbindung die Möglichkeit bieten, sensible Informationen zu verbreiten.

Durch die steigende Computerisierung und dazugehörige Mobilität ist aber das vermehrte Auftreten computertechnisch-begründeter Information Leakage Vorfälle zu beobachten. Firmware- / Treiber-basierte Angriffe sowie das Ausnutzen von Buffer-Overflow-Schwächen nehmen zu und führen selbst bei vermeintlich geschützten Systemen dazu, dass Informationen "abgegriffen" werden.

Monolithische Betriebssysteme (z. B. Linux) weisen im Kernelbereich alle wichtigen Systemkomponenten bzw. Funktionen auf und trennen hiervon nur die Nutzerapplikationen ab.

Nachteil dieser Betriebssysteme ist, dass bei erfolgreichem Angriff auf Kernelebene, z.B. auf einen Treiber im privilegierten Modus, diese monolithische Architektur zu einer Übernahme des Gesamtsystems führen kann und die Exposition von sensiblen Informationen ermöglicht wird.

Hybrid- oder auch Makrokernel (z. B. WIN 8, Mac OS X) versuchen dieses Problem zu lösen, indem sie Teile aus dem Kernelbereich entfernen, welche nicht privilegiert laufen müssen. Dennoch ist es über Rechteeskalations-basierten Attacken möglich, Vollzugriff auf angegriffene Systeme zu bekommen.

Ein Mikrokern (z. B. L4, siehe Referenz [2]; QNX, siehe Referenz [3]; oder PikeOS, siehe Referenz [4]) hingegen besitzt nur elementare Funktionen im Kernelbereich, welche in der Regel die (virtuelle) Speicher- und Prozessverwaltung betreffen. Damit ist die angreifbare Codebasis sehr klein und im L4-Fall auf ca. 40.000 Zeilen Code reduziert.

Alle anderen Komponenten werden separiert bzw. isoliert im Nutzermodus, und nicht im Kernelmodus, ausgeführt.

So lassen sich z. B. Treiber, Netzwerkanbindung, Benutzerprogramme, geteilter Speicher, Schnittstellen, Applikationen oder Systemdienste voneinander trennen. Angriffe können so schwer auf andere Komponenten übergreifen und sie kompromittieren.

Spezielle Bereiche, wie z. B. kryptografische Operationen, lassen sich so stark isolieren, dass Angriffe auf sie sehr erschwert oder nahezu ausgeschlossen werden können.

Weitere Mikrokern-basierte Umgebungen sind bekannt aus US2012/272240A1 und US2008/016313A1.

Prinzipiell lässt sich die Aufteilung eines Mikrokernbetriebssystems nach Bedarf und Einsatzzweck realisieren. Mikrokerne, wie der L4, bieten als Basis die Möglichkeit, andere Betriebssysteme und Komponenten virtualisiert laufen zu lassen (Type-1 Virtualisierung). Diese Virtualisierung bietet einen zusätzlichen Schutz, da der Mikrokern als Abstraktionsschicht zwischen Treiber / Betriebssystem und Hardware fungiert.

Zusätzlich ist es in einem L4 Mikrokern möglich, leichtgewichtige Mikrokernapplikationen virtualisiert laufen zu lassen, welche z. B. Verwaltungs- und Kontrollaufgaben im System übernehmen können.

Als Zugriffsmodel wird beim L4 Mikrokern "Capability-based Access Control" eingesetzt, d.h. jedes Zugriffsrecht wird im System über "Fähigkeiten" bzw. Capabilities wird. Darüber hinaus werden diese Fähigkeiten zur Kompilierzeit festgelegt und können zur Laufzeit nicht geändert werden. Eine Fähigkeit kann hierbei ein Zugriffsrecht auf eine Komponente, einen Dienst, eine Ressource, usw. sein, welche auch mit einem eigenen Verarbeitungsprotokoll belegt werden kann. Dieses Protokoll kann hierbei selbst Sicherheitschecks beinhalten, um gefährdete Dienste, Komponenten oder Ressourcen zu schützen.

In der Vergangenheit wurden Mikrokerne, welche auch mehrere virtualisierte Betriebssysteminstanzen verwalten können, aus Leistungs- und Ressourcengründen oft vernachlässigt. Moderne IT bietet heutzutage jedoch genügend Ressourcen, selbst mobile Systeme mit einem Mikrokern in solcher Konfiguration auszustatten.

Referenz [5] betrifft ein System und ein Verfahren zum gleichzeitigen Betreiben mehrerer Betriebssystemumgebungen auf einer Hardware-Plattform. Dabei wird ein Mikrokern benutzt, der mehrere Betriebssysteme gleichzeitig auf einem System hostet.

Referenz [6] betrifft trusted computing mit einem Mikrokernel.

Referenz [7] betrifft einen Mikrokernel, der in einen Kommunikationsadressraum, einen sicherheitsverstärkten Adressraum und einen gesicherten Operationsadressraum partitioniert ist.

Referenz [8] betrifft ein mobiles Kommunikationsgerät, welches einen Mikrokernel aufweist. Ein L4-Kern stellt einen offenen Bereich, den der Nutzer für eigene Anwendungen nutzen kann, und einen abgetrennten, sicheren Bereich bereit, in dem sicherheitskritische Daten gespeichert werden.

### Referenzliste:

[1] - https://securelist.com/analysis/internal-threats-reports/36200/internal-it-threats-in-russia-in-2007-2008-summary-and-forecast/
[2] - L4 Mikrokern http://sigops.org/sosp/sospl3/papers/pl33-elphinstone.pdf
[3] - QNX http://www.qnx.de
[4] - PikeOS http://www.sysgo.com/products/pikeos-rtos-and-virtualization-concept/
[5] - US 5,764,984 A
[6] - Setapa, S.; Isa, M.A.M.; Abdullah, N.; Manan, J.-L.A., "Trusted computing based microkernel," Computer Applications and Industrial Electronics (ICCAIE), 2010 International Conference on, 5-8 Dec. 2010
[7] - US 8,402,267 B1
[8] - SiMKo3 SMartphoneS; http://www.t-systems.de/umn/t-systems-flyer-simko3-smartphones-aber-sicher-die-sichere-mobile-zukunft-hat-begonnen-/1123256_1/blobBinary/Flyer-SiMKo3.pdf

Der Erfindung liegt die Aufgabe zugrunde eine Netzwerkumgebung zur Verwendung in einer Netzwerkarchitektur, eine Netzwerkarchitektur und ein sicheres Backend zur Verwendung in einer Netzwerkarchitektur bereitzustellen.

Diese Aufgabe wird mit den Verfahren bzw. den Vorrichtungen gemäß den unabhängigen Patentansprüchen gelöst.

Die abhängigen Patentansprüche beziehen sich auf weitere Aspekte der Erfindung.

Die Erfindung geht dabei von dem Grundgedanken aus, dass durch logische Trennung aller kritischen Komponenten, sowohl in horizontaler Ebene (Isolation) als auch in vertikaler Ebene (Virtualisierung), die Angriffsfläche auf das Nutzersystem bzw. die Nutzerumgebung bzw. das User Environment (UE) minimiert wird.

Der Mikrokern als ausführende Basis selbst, ist durch seinen begrenzten Funktionsumfang und Integration in das System nicht von außen ansprechbar.

Einer der Kernpunkte der Erfindung ist die Erstellung einer sicheren Nutzerumgebung bzw. eines User Environment basierend auf einer Mikrokernarchitektur. Der Mikrokern und die dazugehörige Laufzeitumgebung ermöglichen das Erzeugen und Verwalten von Bereichen und/oder Mikrokernapplikationen.

Ein oder mehrere Nutzerbereiche können umgesetzt werden, welche dem Nutzer freien Handlungsspielraum geben, aber strikt getrennt von den anderen Bereichen arbeiten. Ein sicherer Arbeitsbereich setzt Maßnahmen um, welche Information Leakage aber nicht das produktive Arbeiten verhindern. Eine "Dispatcher"-Einheit sorgt für die Aussenkommunikation und verhindert "Information Leakage" via Kommunikationsschnittstellen / Seitenkanal. Jeder kritische Treiber wird isoliert ausgeführt in einem Bereich, wobei dazugehörige Schnittstellen bzw. angebotene Dienste so restriktiv definiert und umgesetzt werden, dass ein Übergreifen von Angriffen von und zu dem Treiber verhindert werden.

Leichtgewichtige Mikrokernapplikationen sorgen für weitere Sicherheit in dem sie Sicherheitschecks von anderen Bereichen / Komponenten durchführen.

Die Erfindung betrifft eine Nutzerumgebung zur Verwendung in einer Netzwerkarchitektur, umfassend: ein Mikrokembetriebssystem, eine dazugehörige Laufzeitumgebung, und mehrere Einrichtungen, wobei die mehreren Einrichtungen durch Virtualisierung entstandene Bereiche und/oder Mikrokernapplikationen sind. Die Einrichtungen sind voneinander isoliert.

Die Virtualisierung der Bereiche und/oder Mikrokernapplikation findet in dem Mikrokernbetriebssystem statt.

Das Mikrokernbetriebssystem und die dazugehörige Laufzeitumgebung bilden die Basis der vorliegenden Erfindung. Vorzugsweise können das Mikrokernbetriebssystem und die dazugehörige Laufzeitumgebung auf jede Board- / CPU-Architektur übertragen werden.

Vorzugsweise benutzt der Mikrokern Capabilities, um Zugriffsrechte im System zu verteilen (siehe z.B. http://en.wikipedia.org/wiki/Capability-based_security) .

Vorzugsweise können in dem Bereich ein Betriebssystem oder Teile eines Betriebssystems virtualisiert betrieben werden. Vorzugsweise sind Teile eines Betriebssystems hierbei den Anforderungen und Funktionen des Bereichs und/oder der Verwendung der Nutzerumgebung angepasste Systeme, welche dedizierte Aufgaben übernehmen können, vorzugsweise das Bereitstellen eines sicheren Arbeitsbereichs oder das Verwalten von isolierten Treibern.

Vorzugsweise sind Mikrokernapplikationen Programme, besonders bevorzugt leichtgewichtige Programme, welche in ihrem Funktionsumfang beschränkt sind aber vom Mikrokernbetriebssystem genauso wie Bereiche behandelt werden.

Die Nutzerumgebung weist eine erste Einrichtung auf, die geeignet ist, mindestens einen isolierten Dienst bereitzustellen und den anderen Einrichtungen Zugang zu dem mindestens einem Dienst bereitzustellen. Die erste Einrichtung kann ein Bereich oder eine Mikrokernapplikation sein.

Vorzugsweise stellt die erste Einrichtug den anderen Einrichtungen Zugang zu Diensten bereit, welche für die Datenverarbeitung notwendig sind.

Vorzugsweise, besonders bevorzugt nach Grösse und Komplexität, können die Dienste auch in Form von Mikrokernapplikationen den anderen Einrichtungen bereitgestellt werden. Vorzugsweise, besonders bevorzugt nach Sicherheitsbedürfnis und Möglichkeit, kann jeder Dienst separat als eigenständige Instanz oder in einer Sammlung innerhalb einer Einrichtung, d.h eines Bereichs und/oder einer Mikrokernapplikation, auftreten.

Die Nutzerumgebung weist eine zweite Einrichtung auf, die einen Bereich aufweist, der ein eigenes Betriebssystem aufweist, welches geeignet ist nur vordefinierte Funktionen und Programme in einem Nutzermodus auszuführen.

Vorzugsweise kann das eigene Betriebssystem des zweiten Bereichs Windows, Linux, oder Android sein. Vorzugsweise ist das Betriebssystem soweit angepasst, dass in ihm nur vordefinierte Funktionen und Programme im Nutzermodus ausgeführt werden können. Vorzugsweise sind die Dokumentenverarbeitung und das Kommunizieren mit dem Secure Backend und anderen Nutzerumgebungen möglich. Vorzugsweise kann der Sicherheitsbereich nicht eigenständig mit externen Entitäten kommunizieren, sondern ist hierfür auf eine dritte Einrichtung angewiesen. Vorzugsweise wird andere Kommunikation unterbunden.

Die Nutzerumgebung weist eine dritte Einrichtung auf, wobei die dritte Einrichtung einen Bereich aufweist, der geeignet ist, mit einem dedizierten externen Dispatch-Server zu kommunizieren und Kommunikations-Anfragen von einem oder mehreren anderen Bereichen der Nutzerumgebung und/oder einem oder mehreren Mikrokernapplikationen entgegenzunehmen, zu Dispatch-Anfragen weiterzuverarbeiten und an den Dispatch-Server weiterzuleiten und Antworten auf die Dispatch Anfragen von dem Dispatch-Server zu empfangen.

Vorzugsweise ist die dritte Einrichtung, auch Dispatcher genannt, die zentrale Komponente, um Information Leakage über Seitenkanäle in externer Internet-Kommunikation aus dem sicheren Bereich zu verhindern. Vorzugsweise kommuniziert der Dispatcher hierfür mit dem dedizierten externen Dispatch-Server, welcher Dispatch-Anfragen vom Dispatcher annimmt und verarbeitet.

Vorzugsweise ist es nur erlaubten Applikationen und/oder Diensten möglich, den dritten Bereich, d.h. den Dispatcher, anzusprechen und über diesen entsprechende Anfragen an den Dispatch-Server zu senden. Vorzugsweise sind alle anderen Kommunikationswege soweit deaktiviert, dass hierüber keine Kommunikation möglich ist. Somit ist sichergestellt, dass nur dieser Kommunikationsweg vom Gerät/ der Nutzerumgebung aus genutzt werden kann.

Mit anderen Worten grenzt sich die Eigenschaft des Dispatchers im Vergleich zu einem VPN Tunnel soweit ab, dass der VPN Tunnel das Ziel hat, die transportierten Daten vor unberechtigtem Zugriff und optional auch Modifikation von aussen zu schützen. Der Dispatcher hingegen sichert vor Zugriff von innen ab, d.h. ein komprommitiertes Gerät ermöglicht nur beschränkt oder gar keine Kommunikation für Angreifer.

Die Nutzerumgebung weist eine vierte Einrichtung auf, die ein Firewallsystem aufweist, das geeignet ist, jegliche eingehende oder ausgehende Kommunikation der Nutzerumgebung außer der Kommunikation über den Dispatcher zu unterbinden. Vorzugsweise sorgt die vierte Einrichtung dafür, dass einzig die beabsichtigte Kommunikation über den Dispatcher erlaubt wird.

Vorzugsweise weist die vierte Einrichtung eine Mikrokernapplikation auf. Vorzugsweise führt die vierte Einrichtung initiale und/oder zyklische Integritätschecks wichtiger Komponenten, insbesondere die Überprüfung von Checksummen, z. B. SHA256, aus. Vorzugsweise sind wichtige Komponenten mindestens eines der folgenden: Firmwares, Dienste, Operationen, Treiber, Systemkomponenten oder sonstige als wichtig eingestufte Teile sein. Vorzugsweise ergibt sich die Festlegung, was als wichtig betrachtet wird, sich aus dem jeweiligen Einsatzzweck der Lösung.

Die Nutzerumgebung weist eine fünfte Einrichtung auf, wobei die fünfte Einrichtung einen Bereich aufweist, der geeignet ist jeden Treiber der Nutzerumgebung isoliert auszuführen und den anderen Komponenten der Nutzerumgebung die entsprechenden Dienste und/oder Schnittstellen des Treibers zur Verfügung zu stellen.

Vorzugsweise werden in einem durch Virtualisierung entstandenen Bereich Treiber isoliert ausgeführt. Vorzugsweise werden über gesicherte Verbindungen und Dienste die dafür relevanten Komponenten zur Verfügung gestellt.

Gemäß einer Ausführungsform der Erfindung weist die Nutzerumgebung eine sechste Einrichtung auf, die einen Bereich aufweist, der geeignet ist kryptographische Operationen isoliert auszuführen.

Das isolierte Ausführen von kryptographischen Operation erhöht, je nach Einsatzweck, die Sicherheit signifikant. Vorzugsweise werden die kryptographischen Operationen, falls sie nicht isoliert in der sechsten Einrichtung ausgeführt werden, zusammen mit anderen Funktionen bereitgestellt.

Gemäß einer Ausführungsform der Erfindung weist die Nutzerumgebung eine siebte Einrichtung auf, die einen Bereich aufweist, der ein eigenes Betriebssystem aufweist, welches geeignet ist Funktionen und Programme auszuführen.

Vorzugsweise kann, um den Nutzer die Möglichkeit des nicht-restriktiven Nutzen des Geräts zu ermöglichen, die siebte Einrichtung mit einem eigenständigen offenen Bereich isoliert ausgeführt werden. In diesem Bereich ist der Nutzer in der Lage, Aktivitäten ohne spezielle Einschränkungen durchzuführen, wobei der Zugriff auf die anderen Bereiche strengstens eingeschränkt ist. Nur minimale Dienste, z. B. zur Internetkommunikation oder Steuerung, werden stark abgesichert zur Verfügung gestellt.

Gemäß einer Ausführungsform weisen die Dispatch-Anfragen mindestens eine der folgenden Informationen auf:
- Größe des Payloads,
- Zeitpunkt der Übertragung,
- Versender der Kommunikation,
- Empfänger der Kommunikation,
- Ersteller der Kommunikationsanfrage an den Dispatcher,
- kryptographische Signatur, vorzugsweise basierend auf einer Public-Key Infrastruktur.

Gemäß einer Ausführungsform der Erfindung ist der dritte Bereich geeignet, die Autorisierung der Einrichtungen zur Kommunikation über den dritten Bereich zu überprüfen.

Gemäß einer Ausführungsform der Erfindung ist der dritte Bereich geeignet, über ein Zugriffskontrollmodell Zugriff auf einen Datenspeicher des Backend zu erreichen, wobei das Zugriffskontrollmodell vorzugsweise mindestens eines der folgenden ist: Discretionary Access Control (DAC)-Modell, Role-based Access Control (RBAC)-Modell oder Mandatory Access Control (MAC)-Modell.

Gemäß einer Ausführungsform der Erfindung ist der dritte Bereich geeignet, über einen mit dem Dispatch-Server verbundenen Kommunikationsserver des Backend mit einem dritten Bereich einer zweiten Nutzerumgebung zu kommunizieren.

Gemäß einer Ausführungsform der Erfindung ist der dritte Bereich geeignet, auf ein mit dem Dispatch-Server verbundenen Web-Server zuzugreifen.

Die Erfindung betrifft eine Netzwerkarchitektur umfassend: mindestens eine Nutzerumgebung nach einer der vorstehenden Ausführungsformen, einem sicheren Backend und einem Dispatch-Server, wobei der Dispatch-Server geeignet ist, von der mindestens einen Nutzerumgebung ankommende Dispatch-Anfragen und Daten anzunehmen, zu selektieren und an Komponenten des sicheren Backends weiterzuleiten und Daten von den Komponenten des sicheren Backends an die mindestens eine Nutzerumgebung weiterzuleiten, und wobei das sichere Backend einen Backendzugangsserver aufweist, der durch eine Schutzeinrichtung geschützt ist und ein Identitätsmanagement und ein Zugangskontrollsystem aufweist, welches geeignet ist den Zugang zu dem sicheren Backend zu reglementieren.

Vorzugsweise ist der Dispatch-Server Teil des sicheren Backends.

Gemäß einer Ausführungsform der Erfindung umfasst das sichere Backend ferner einen Datenspeicher, der derart ausgestaltet ist, dass eine dritte Einrichtung einer Nutzerumgebung auf den Datenspeicher über ein Zugriffskontrollmodell Zugriff erlangen kann, wobei das Zugriffskontrollmodell vorzugsweise mindestens eines der folgenden ist: Discretionary Access Control (DAC)-Modell, Role-based Access Control (RBAC)-Modell oder Mandatory Access Control (MAC)-Modell.

Gemäß einer Ausführungsform der Erfindung weist die Netzwerkarchitektur mindestens einen erste und eine zweite Nutzerumgebung nach einer der vorstehenden Ausführungsformen auf.

Vorzugsweise weist das sichere Backend einen Kommunikationsserver auf, der mit dem Dispatch-Server verbunden ist und der derart ausgestaltet ist, dass ein dritter Bereich der ersten Nutzerumgebung über den Kommunikationsserver mit einem dritten Bereich der zweiten Nutzerumgebung kommunizieren kann.

Die Erfindung betrifft ein sicheres Backend zur Verwendung in einer Netzwerkarchitektur umfassend: einen Backendzugangsserver, der ein Zugangskontrollsystem aufweist, welches geeignet ist den Zugang zu dem sicheren Backend zu reglementieren, und einen Dispatch-Server, der geeignet ist von mindestens einer Nutzerumgebung nach der vorstehenden Ausführungsformen ankommende Dispatch-Anfragen und Daten anzunehmen, zu selektieren und an weitere Komponenten des sicheren Backends weiterzuleiten und Daten von den weiteren Komponenten des sicheren Backends an die mindestens eine Nutzerumgebung weiterzuleiten.

Vorzugsweise kann das sichere Backend (engl. Secure Backend) verschiedene Komponenten aufweisen, welche aber alle einer sicherheitstechnischen Konfiguration folgen müssen.

Vorzugsweise weist der Backendzugangsserver ein Identitätsmanagement auf.

Vorzugsweise wird der Backendzugangsserver durch eine Schutzeinrichtung geschützt, wobei die Schutzeinrichtung besonders bevorzugt mindestens eine Firewall und/oder mindestens ein Angrifferkennungssystem (engl. Intrusion Detection System - IDS) und/oder mindestens ein Angrifferkennungs- und Präventionssystem (engl. Intrusion Detection and Prevention System) aufweist.

Vorzugsweise weist das Zugangskontrollsystem einen Virtual Private Network (VPN)-Zugangsserver oder ein proprietäres Zugangssystem auf, welches ausgestaltet ist, dass die Kommunikation mit dem Backend sicher verschlüsselt ist.

Vorzugsweise weist das sichere Backend einen Intranet Webserver auf, der zur Verteilung von internen Informationen innerhalb der Netzwerkarchitektur geeignet ist. Vorzugsweise weist das sichere Backend einen Intranet Webserver auf, welcher nur durch die berechtigten Nutzerumgebungen zugreifbar ist. Vorzugsweise weist das sichere Backend einen Intranet Webserver auf, der zur Verteilung von internen Informationen innerhalb der Netzwerkarchitektur geeignet ist und welcher nur durch die berechtigten Nutzerumgebungen zugreifbar ist.

Vorzugsweise nimmt der Dispatch-Server Kommunikationsanfragen vom Endgerätedienst Dispatcher, d.h. vom Dispatcher der Nutzumgebung an. Vorzugsweise ist der Dispatch-Server Teil des Backendzugangsservers. Vorzugsweise ist der Dispatch-Server Teil der Netzinfrastruktur eines (Mobilfunk)-Netzwerkbetreibers. Vorzugsweise ist ein Teil des Dispatch-Servers Teil des Backendzugangsservers und ein anderer Teil des Dispatch-Servers Teil der Netzinfrastruktur eines (Mobilfunk)-Netzwerkbetreibers.

Generell sollte sichergestellt werden, dass das Secure Backend in einer vertrauenswürdigen Umgebung läuft und durch vertrauenswürdiges Personal betrieben wird.

Gemäß einer Ausführungsform der Erfindung umfasst das sichere Backend einen Datenspeicher, der derart ausgestaltet ist, dass eine dritte Einrichtung einer Nutzerumgebung auf den Datenspeicher über ein Zugriffskontrollmodell Zugriff erlangen kann.

Vorzugsweise kann der Backenddatenspeicher ein Dokumentenmanagementsystem aufweisen.

Vorzugsweise kann der Backenddatenspeicher mindenstens eines der folgenden aufweisen: eine Datenbank, einen Fileserver, einen FTP-Servers, einen Netzwerkspeichers.

Vorzugsweise kann der Backenddatenspeicher als zentraler Ablageort für Informationen dienen. Vorzugsweise wird dabei ein fallspezifisch geeignetes Access Control Model umgesetzt.

Vorzugsweise ist das Zugriffskontrollmodell mindestens eines der folgenden: Discretionary Access Control (DAC)-Modell, Role-based Access Control (RBAC)-Modell oder Mandatory Access Control (MAC)-Modell.

Gemäß einer Ausführungsform der Erfindung weist das sichere Backend einen Kommunikationsserver auf, der mit dem Dispatch-Server verbunden ist und der derart ausgestaltet ist, dass ein dritter Bereich einer ersten Nutzerumgebung nach einer der vorstehenden Ausführungsformen über den Kommunikationsserver mit einem dritten Bereich einer zweiten Nutzerumgebung nach einer der vorstehenden Ausführungsformen kommunizieren kann.

Die hier vorgestellte Erfindung greift bei diesen Problematiken auf technischer Ebene ein, bietet aber auch Hilfsmittel, papier-basierte Probleme zu lösen. So dürfen beispeilsweise vertrauliche und/oder klassifizierte Informationen nicht immer auf Computern gespeichert/verarbeitet werden. Diese werden vorzugsweise ausgedruckt. Bei Ausrucken besteht in der Regel die Gefahr von Verlust und Kopie vertraulicher Informationen. Wenn nun diese Informationen beispielsweise nicht mehr ausgedruckt werden und beispielsweise nur noch stark gesichert auf Computern verarbeitet werden können, wird das Problem der Ausdrucke von gelöst.

Als Basis dient ein Betriebssystem, welche dem Mikrokernansatz folgt.

Die Erfindung wird nachstehend anhand von Beispielen und der Zeichnung näher erläutert. Es zeigen:
Figur 1 ein schematisches Diagramm einer bevorzugten Ausführungsform einer Nutzerumgebung gemäß der vorliegenden Erfindung,
Figur 2 ein schematisches Diagramm einer weiteren bevorzugten Ausführungsform einer Nutzerumgebung gemäß der vorliegenden Erfindung,
Figur 3 ein schematisches Diagramm einer weiteren bevorzugten Ausführungsform einer Nutzerumgebung gemäß der vorliegenden Erfindung,
Fig. 4 ein schematisches Diagramm einer bevorzugten Ausführungsform eines sicheren Backend gemäß der vorliegenden Erfindung, und
Fig. 5 ein schematisches Diagramm einer bevorzugten Ausführungsform einer Netzwerkarchitektur gemäß der vorliegenden Erfindung.

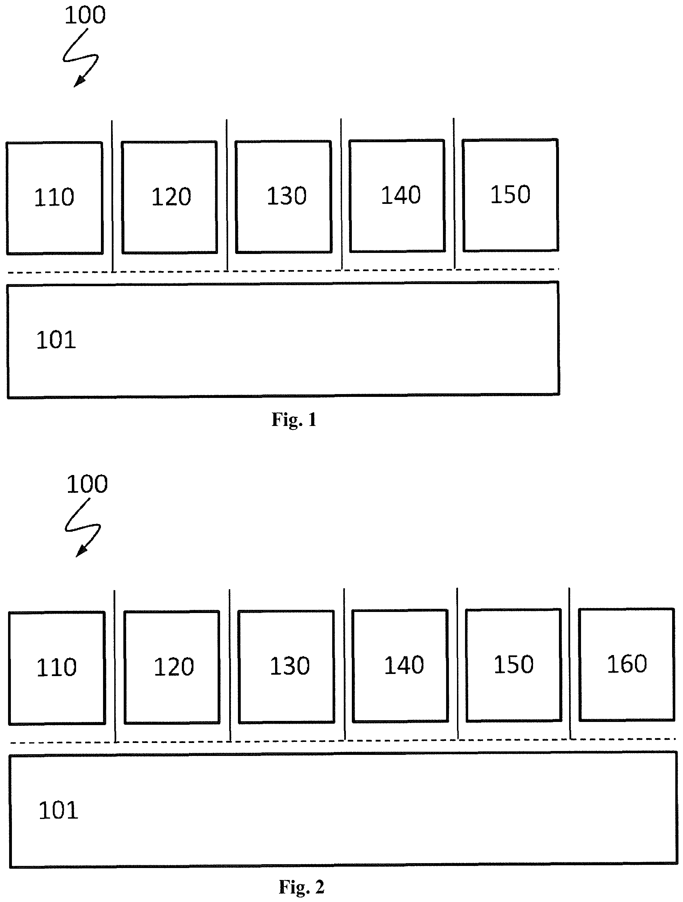

Figur 1 zeigt ein schematisches Diagramm einer bevorzugten Ausführungsform einer Nutzerumgebung 100 gemäß der vorliegenden Erfindung. Die Nutzerumgebung 100 weist ein Mikrokernbetriebssystem 101 und eine dazugehörige Laufzeitumgebung (ebenfalls durch das Bezugszeichen 101 dargestellt) auf. Ferner weist die Nutzerumgebung 100 mehrere Einrichtungen 110 bis 150 auf. Die Einrichtungen 110 bis 150 sind voneinander isoliert, so dass eine direkte Kommunikation der Einrichtungen 110 bis 150 untereinander grundsätzlich nicht möglich ist. Die mehreren Einrichtungen 110 bis 150 sind durch Virtualisierung innerhalb des Mikrokernbetriebssystems 101 entstandene Bereiche und/oder Mikrokernapplikationen. Eine erste Einrichtung 110 ist dabei geeignet mindestens einen isolierten Dienst bereitzustellen und den anderen Einrichtungen 120 bis 150 Zugang zu dem mindestens einem Dienst bereitzustellen. In dem vorliegenden Beispiel ist der mindestens eine Dienst für die Datenverarbeitung notwendig.

Eine zweite Einrichtung 120 weist einen Bereich auf, der ein eigenes Betriebssystem aufweist, welches lediglich geeignet ist, vordefinierte Funktionen und Programme in einem Nutzermodus auszuführen. Hierbei handelt es sich um einen sicheren Arbeitsbereich mit einem angepassten Betriebssystem, in dem nur definierte Funktionen und Programme im Nutzermodus ausgeführt werden können. Vor allem die Dokumentenverarbeitung und das Kommunizieren mit dem weiter unten beschriebenen sicheren Backend 200 und anderen Nutzerumgebungen 100 sind möglich. Dabei ist jedoch zu beachten, dass die zweite Einrichtung 120 nicht eigenständig mit externen Entitäten kommunizieren kann, sondern hierfür auf den weiter unten beschriebenen dritten Bereich 130 angewiesen ist.

Die Nutzerumgebung 100 weist auch eine dritte Einrichtung 130 auf, die geeignet ist mit einem weiter unten beschriebenen dedizierten externen Dispatch-Server 201 zu kommunizieren und Kommunikations-Anfragen von einem oder mehreren anderen Bereichen und/oder einem oder mehreren Mikrokernapplikationen entgegenzunehmen. Diese Kommunikations-Anfragen werden zu Dispatcher-Anfragen weiterverarbeitet und an den Dispatcher-Server weitergeleitet. Die dritte Einrichtung 130 ist ebenfalls geeignet Antworten auf die gestellten Dispatch-Anfragen von dem Dispatch-Server zu empfangen und an die entsprechenden Bereiche und/oder Mikrokernapplikationen weiterzuleiten. Mit anderen Worten, läuft die sichere Kommunikation der anderen Einrichtungen 110, 120, 140, 150 der Nutzerumgebung 100 über die dritte Einrichtung 130.

Die Nutzerumgebung 100 weist auch eine vierte Einrichtung 140 auf. Die vierte Einrichtung 140 beinhaltet ein Firewallsystem, das geeignet ist jegliche eingehende oder ausgehende Kommunikation der Nutzerumgebung 100 - abgesehen von der Kommunikation über die dritte Einrichtung 130 - zu unterbinden. Vorzugsweise führt die vierte Einrichtung 140 auch initiale und/oder zyklische Integritätschecks wichtiger Komponenten der Nutzerumgebung 100 durch. Solche wichtigen Komponenten können unter anderem Firmwares, Dienste, Operationen, Treiber, Systemkomponenten oder sonstige als wichtig eingestufte Teile sein. Die Festlegung, was als wichtig innerhalb der Nutzerumgebung 100 betrachtet wird, ergibt sich dabei aus dem jeweiligen Einsatzzweck der mit der Nutzerumgebung 100 verfolgten Lösung. Ferner kann die vierte Einrichtung 140 auch die Überprüfung von Checksummen durchführen.

Die Nutzerumgebung 100 weist ferner eine fünfte Einrichtung 150 auf. Die fünfte Einrichtung 150 weist dabei einem Bereich auf, der geeignet ist jeden notwendigen Treiber der Nutzerumgebung 100 isoliert auszuführen und den anderen Komponenten der Nutzerumgebung 100 die entsprechenden Dienste und/oder Schnittstellen des Treibers zur Verfügung zu stellen. Dieses isolierte Ausführen der jeweilig notwendigen Treiber trägt ebenfalls zum gesamten Sicherheitskonzept der vorliegenden Erfindung bei.

Figur 2 zeigt ein schematisches Diagramm einer weiteren bevorzugten Ausführungsform einer Nutzerumgebung 100 gemäß der vorliegenden Erfindung. Die Nutzerumgebung 100 gemäß Figur 2 unterscheidet sich dabei von der Nutzerumgebung 100 gemäß Figur 1 lediglich dadurch, dass die Nutzerumgebung 100 gemäß Figur 2 eine weitere Einrichtung, die sechste Einrichtung 160, aufweist. Diese Einrichtung 160 ist in die Nutzerumgebung 100 in dem gleichen Maße integriert, wie die Nutzerumgebungen 110 bis 150. Die sechste Nutzerumgebung 160 ist geeignet kryptographische Operationen isoliert aufzuführen. Dieses isolierte Ausführen von kryptographischen Operation erhöht, je nach Einsatzzweck, die Sicherheit der gesamten Nutzerumgebung 100 signifikant.

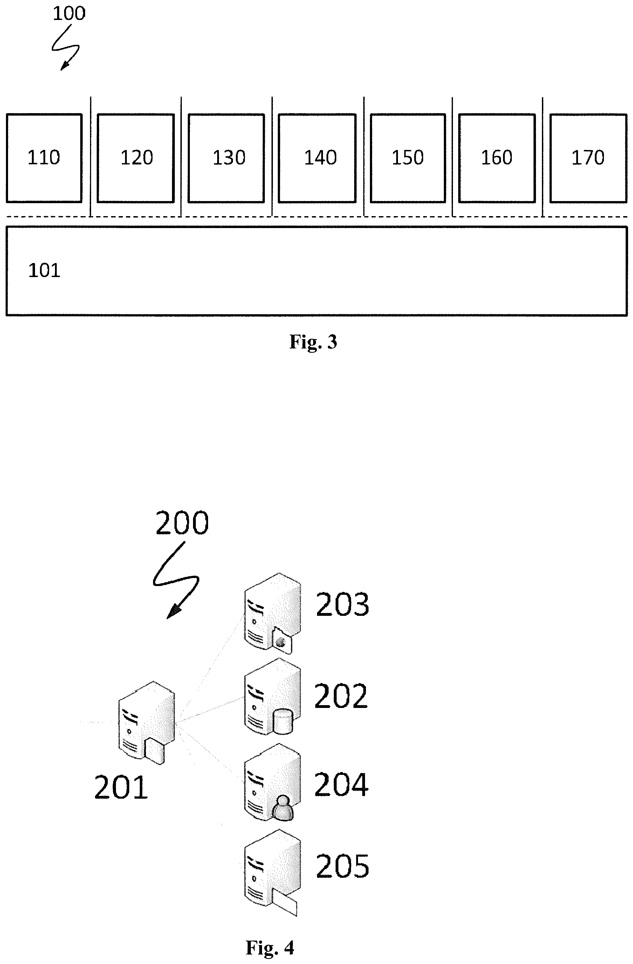

Figur 3 zeigt ein schematisches Diagramm einer weiteren bevorzugten Ausführungsform einer Nutzerumgebung 100 gemäß der vorliegenden Erfindung. Die Nutzerumgebung 100 gemäß Figur 3 unterscheidet sich dabei von der Nutzerumgebung 100 gemäß Figur 2 lediglich dadurch, dass die Nutzerumgebung gemäß Figur 3 eine weitere Einrichtung, die siebte Einrichtung 170, aufweist. Die siebte Einrichtung 170 der Nutzerumgebung 100 weist einen Bereich auf, der ein eigenes Betriebssystem aufweist, welches geeignet ist Funktionen und Programme auszuführen. Die siebte Einrichtung 170 ermöglicht eine offene Nutzung für den Nutzer, d.h. der Nutzer hat die Möglichkeit des nicht restriktiven Nutzens des Gerätes auf dem die Nutzerumgebung 100 läuft und es wird somit ein eigenständiger offener Bereich isoliert ausgeführt. In diesem Bereich ist der Nutzer in der Lage, Aktivitäten ohne spezielle Einschränkungen durchzuführen, wobei der Zugriff aus dem offenen Bereich bzw. der siebten Einrichtung 170 auf die anderen Einrichtungen 110 bis 160 der Nutzerumgebung 100 strengstens eingeschränkt bzw. nicht möglich ist. Lediglich minimale Dienste, wie z.B. zur Nutzung der Internetkommunikation oder der Steuerung werden stark abgesichert zur Verfügung gestellt.

Figur 4 zeigt ein schematisches Diagramm einer bevorzugten Ausführungsform eines sicheren Backend 200 gemäß der vorliegenden Erfindung. Das sichere Backend 200 weist einen Backendzugangsserver und einen Dispatch-Server auf. In der vorliegenden Ausführungsform sind sowohl der Backendzugangsserver als auch der Dispatch-Server durch einen gemeinsamen Server 201 umfasst. Es versteht sich jedoch, dass der Backendzugangsserver als auch der Dispatch-Server in jeweils getrennten Entitäten vorhanden sein können. So kann beispielsweise der Dispatch-Server Teil der Netzwerkarchitektur eines Mobilfunkbetreibers sein. Der Backendzugangsserver weist ein Zugangskontrollsystem aus, welches geeignet ist den Zugang zu dem sicheren Backend zu reglementieren. Der Dispatcherserver ist geeignet von der Nutzerumgebung 100, wie sie beispielsweise in den Figuren 1 bis 3 beschrieben ist, ankommende Dispatch-Anfragen und Daten anzunehmen, zu selektieren und an weitere Komponenten des sicheren Backends 200 weiterzuleiten und entsprechende Daten bzw. Antworten von den weiteren Komponenten des sicheren Backends 200 an diese Nutzerumgebung 100 weiterzuleiten. Mit anderen Worten läuft die Kommunikation zwischen der Nutzerumgebung 100 und dem sicheren Backend 200 über diesen Dispatch-Server. In dem vorliegenden Ausführungsbeispiel weist der Backendzugangsserver eine Schutzeinrichtung auf, vorliegend eine Firewall.

Das sichere Backend 200 weist einen Intranet Webserver 203 auf, der zur Verteilung von internen Informationen innerhalb der Netzwerkarchitektur geeignet ist. Dieser Intranet Webserver 203 ist nur durch die berechtigten Nutzerumgebungen 100 zugreifbar.

Das sichere Backend 200 weist ferner einen Datenspeicher-Server 202 auf, der derart ausgestaltet ist, dass die dritte Einrichtung 130 der Nutzerumgebung 100 auf den Datenspeicher/den Datenspeicher-Server 202 über ein Zugriffskontrollmodell Zugriff erlangen kann.

Das sichere Backend 200 weist ferner einen Instant-Messaging-Server 204 auf, d.h. einen Kommunikationsserver, über den ein dritter Bereich 130 einer ersten Nutzerumgebung 100 mit einem dritten Bereich 130 einer zweiten Nutzerumgebung 100 kommunizieren kann. Für den gleichen Zweck, d.h. die Kommunikation einer Nutzerumgebung 100 mit einer anderen Nutzerumgebung 100, weist das sichere Backend 200 gemäß des vorliegenden Ausführungsbeispiels einen E-Mail-Server 205 auf.

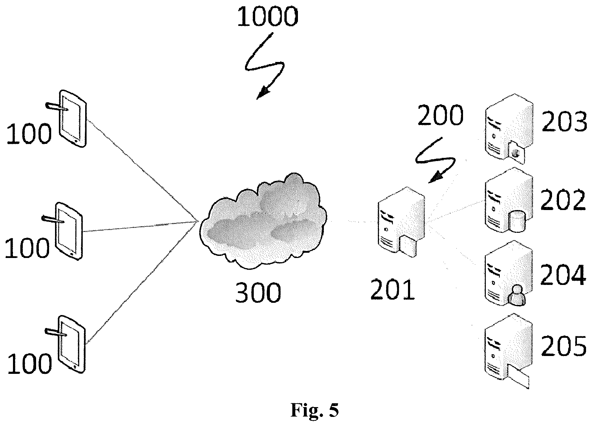

Figur 5 zeigt ein schematisches Diagramm einer bevorzugten Ausführungsform einer Netzwerkarchitektur 1000 gemäß der vorliegenden Erfindung. Die Netzwerkarchitektur 1000 weist einen oder mehrere Nutzerumgebungen 100 gemäß einer Ausführungsform der vorliegenden Erfindung auf, die über ein Weitverkehrsnetz 300, z.B. das Internet, mit dem sicheren Backend 200 gemäß einer Ausführung vom der vorliegenden Erfindung verbunden ist bzw. sind. Exemplarisch ist in Figur 5 ein sicheres Backend 200 gemäß der in Figur 4 gezeigten Ausführungsform dargestellt. Es versteht sich jedoch, dass jedes andere sichere Backend 200 gemäß der vorliegenden Erfindung ebenfalls geeignet ist. Über die Netzwerkarchitektur 1000 ist es mögliche das zahlreiche Nutzerumgebungen 100 über verschlüsselte Verbindung mit dem sicheren Backend 200 kommunizieren können, wobei das sichere Backend 200 zentral für jeglichen Informationsaustausch zuständig ist.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschließlich die in den Ansprüchen beziehungsweise in den Ausführungsbeispielen beschriebenen Merkmale umfasst sowie auch solche, die zusätzliche andere Merkmale umfassen.

## Patentansprüche

1. Nutzerumgebung zur Verwendung in einer Netzwerkarchitektur, umfassend:
ein Mikrokembetriebssystem, eine dazugehörige Laufzeitumgebung, und
mehrere Einrichtungen, wobei die mehreren Einrichtungen durch Virtualisierung entstandene Bereiche und/oder Mikrokernapplikationen sind und die Einrichtungen voneinander isoliert sind,
wobei eine erste Einrichtung konfiguriert ist mindestens einen isolierten Dienst bereitzustellen und den anderen Einrichtungen Zugang zu dem mindestens einen Dienst bereitzustellen,
wobei eine zweite Einrichtung einen Bereich aufweist, der ein eigenes Betriebssystem aufweist, welches konfiguriert ist nur vordefinierte Funktionen und Programme in einem Nutzermodus auszuführen,
wobei eine dritte Einrichtung einen Bereich aufweist, der konfiguriert ist mit einem dedizierten externen Dispatch-Server zu kommunizieren und Kommunikations-Anfragen von einem oder mehreren anderen Bereichen der Nutzerumgebung und/oder einem oder mehreren Mikrokernapplikationen entgegenzunehmen, zu Dispatch-Anfragen weiterzuverarbeiten und an den Dispatch-Server weiterzuleiten und Antworten auf die Dispatch Anfragen von dem Dispatch-Server zu empfangen, wobei eine vierte Einrichtung ein Firewallsystem aufweist, das konfiguriert ist, jegliche eingehende oder ausgehende Kommunikation der Nutzerumgebung außer der Kommunikation über den Dispatcher zu unterbinden, und
wobei eine fünfte Einrichtung einen Bereich aufweist, der konfiguriert ist jeden Treiber der Nutzerumgebung isoliert auszuführen und den anderen Komponenten der Nutzerumgebung die entsprechenden Dienste und/oder Schnittstellen des Treibers zur Verfügung zu stellen.

2. Nutzerumgebung nach Anspruch 1, eine sechste Einrichtung umfassend, die einen Bereich aufweist, der konfiguriert ist, kryptographische Operationen isoliert auszuführen.

3. Nutzerumgebung nach Anspruch 1 oder 2, eine siebte Einrichtung umfassend, die einen Bereich aufweist, der ein eigenes Betriebssystem aufweist, welches konfiguriert ist Funktionen und Programme auszuführen.

4. Nutzerumgebung nach einem der Ansprüche 1 bis 3, wobei die vierte Einrichtung konfiguriert ist initiale und/oder zyklische Integritätschecks der Einrichtungen und/oder Komponenten der Einrichtungen auszuführen.

5. Nutzerumgebung nach einem der Ansprüche 1 bis 4, wobei die Dispatch-Anfragen mindestens eine der folgenden Informationen aufweisen:
- Größe des Payloads,
- Zeitpunkt der Übertragung,
- Versender der Kommunikation,
- Empfänger der Kommunikation,
- Ersteller der Kommunikationsanfrage an den Dispatcher,
- kryptographische Signatur.

6. Nutzerumgebung nach einem der Ansprüche 1 bis 5, wobei der dritte Bereich konfiguriert ist, die Autorisierung der Einrichtungen zur Kommunikation über den dritten Bereich zu überprüfen.

7. Nutzerumgebung nach einem der Ansprüche 1 bis 6, wobei der dritte Bereich konfiguriert ist, über ein Zugriffskontrollmodell Zugriff auf einen Datenspeicher des Backend zu erreichen.

8. Nutzerumgebung nach einem der Ansprüche 1 bis 7, wobei der dritte Bereich konfiguriert ist, über einen mit dem Dispatch-Server verbundenen Kommunikationsserver des Backend mit einem dritten Bereich einer zweiten Nutzerumgebung zu kommunizieren.

9. Nutzerumgebung nach einem der Ansprüche 1 bis 8, wobei der dritte Bereich konfiguriert ist, auf ein mit dem Dispatch-Server verbundenen Web-Server zuzugreifen.

10. Netzwerkarchitektur umfassend:
mindestens eine Nutzerumgebung nach einem der vorstehenden Ansprüche, ein sicheres Backend und einen Dispatch-Server,
wobei der Dispatch-Server konfiguriert ist, von der mindestens einen Nutzerumgebung ankommende Dispatch-Anfragen und Daten anzunehmen, zu selektieren und an Komponenten des sicheren Backends weiterzuleiten und Daten von den Komponenten des sicheren Backends an die mindestens eine Nutzerumgebung weiterzuleiten, und
wobei das sichere Backend einen Backendzugangsserver aufweist.

11. Netzwerkarchitektur nach Anspruch 10, wobei der Dispatch-Server Teil des sicheren Backends ist.

12. Netzwerkarchitektur nach Anspruch 10 oder 11, wobei das sichere Backend ferner einen Datenspeicher umfasst, der derart ausgestaltet ist, dass eine dritte Einrichtung der Nutzerumgebung auf den Datenspeicher über ein Zugriffskontrollmodell Zugriff erlangen kann.

13. Netzwerkarchitektur nach einem der Ansprüche 10 bis 12, wobei die Netzwerkarchitektur mindestens einen erste und eine zweite Nutzerumgebung nach einem der Ansprüche 1 bis 9 aufweist und wobei das sichere Backend einen Kommunikationsserver aufweist, der mit dem Dispatch-Server verbunden ist und der derart ausgestaltet ist, dass ein dritter Bereich der ersten Nutzerumgebung über den Kommunikationsserver mit einem dritten Bereich der zweiten Nutzerumgebung kommunizieren kann.

14. Sicheres Backend zur Verwendung in einer Netzwerkarchitektur umfassend:
einen Backendzugangsserver, und
einen Dispatch-Server, der konfiguriert ist von mindestens einer Nutzerumgebung nach einer der Ansprüche 1 bis 9 ankommende Dispatch-Anfragen und Daten anzunehmen, zu selektieren und an weitere Komponenten des sicheren Backends weiterzuleiten und Daten von den weiteren Komponenten des sicheren Backends an die mindestens eine Nutzerumgebung weiterzuleiten.

15. Sicheres Backend nach Anspruch 14, wobei das sichere Backend einen Datenspeicher umfasst, der derart ausgestaltet ist, dass eine dritte Einrichtung einer Nutzerumgebung auf den Datenspeicher über ein Zugriffskontrollmodell Zugriff erlangen kann, und/oder wobei das sichere Backend einen Kommunikationsserver aufweist, der mit dem Dispatch-Server verbunden ist und der derart ausgestaltet ist, dass ein dritter Bereich einer ersten Nutzerumgebung nach einer der Ansprüche 1 bis 9 über den Kommunikationsserver mit einem dritten Bereich einer zweiten Nutzerumgebung nach einer der Ansprüche 1 bis 9 kommunizieren kann.

## Claims

1. User environment for use in a network architecture, comprising:
a microkernel operating system, an associated runtime environment, and
a plurality of devices, wherein the plurality of devices are domains and/or microkernel applications created by virtualization and the devices are isolated from each other,
wherein a first device is configured to provide at least one isolated service and to provide to the other devices access to the at least one service,
wherein a second device has a domain which has its own operating system which is configured to execute only predefined functions and programs in a user mode,
wherein a third device comprises a domain configured to communicate with a dedicated external dispatch server and to receive communication requests from one or more other domains of the user environment and/or one or more microkernel applications, to process them into dispatch requests and forward them to the dispatch server and to receive responses to the dispatch requests from the dispatch server,
wherein a fourth device comprises a firewall system configured to block any incoming or outgoing communication of the user environment other than communication via the dispatcher, and
wherein a fifth device comprises a domain configured to execute each driver of the user environment in isolation and to provide the other components of the user environment with the corresponding services and/or interfaces of the driver.

2. User environment according to claim 1, comprising a sixth device having a domain configured to perform cryptographic operations in isolation.

3. User environment according to claim 1 or 2, comprising a seventh device having a domain which has its own operating system which is configured to execute functions and programs.

4. User environment according to any one of claims 1 to 3, wherein the fourth device is configured to perform initial and/or cyclic integrity checks of the devices and/or components of the devices.

5. User environment according to any one of claims 1 to 4, wherein the dispatch requests comprise at least one of the following information:
- size of the payload,
- time of transmission,
- sender of the communication,
- receiver of the communication,
- creator of the communication request to the dispatcher,
- cryptographic signature.

6. User environment according to any one of claims 1 to 5, wherein the third domain is configured to verify the authorisation of the devices to communicate via the third domain.

7. User environment according to any one of claims 1 to 6, wherein the third domain is configured to access a data store of the backend via an access control model.

8. User environment according to any one of claims 1 to 7, wherein the third domain is configured to communicate with a third domain of a second user environment via a communication server of the backend connected to the dispatch server.

9. User environment according to any one of claims 1 to 8, wherein the third domain is configured to access a Web server connected to the dispatch server.

10. Network architecture comprising:
at least one user environment according to any of the preceding claims, a secure backend,
and a dispatch server,
wherein the dispatch server is configured to accept incoming dispatch requests and data from the at least one user environment, to select and forward them to components of the secure backend and to forward data from the components of the secure backend to the at least one user environment, and
wherein the secure backend has a backend access server.

11. Network architecture according to claim 10, wherein the dispatch server is part of the secure backend.

12. Network architecture according to claim 10 or 11, wherein the secure backend further comprises a data storage which is designed in such a way that a third device of the user environment can access the data storage via an access control model.

13. Network architecture according to any one of claims 10 to 12, wherein the network architecture comprises at least a first and a second user environment according to any one of claims 1 to 9, and wherein the secure backend comprises a communication server which is connected to the dispatch server and which is configured such that a third domain of the first user environment can communicate with a third domain of the second user environment via the communication server.

14. Secure backend for use in a network architecture comprising:
a backend access server, and
a dispatch server configured to accept incoming dispatch requests and data from at least one user environment according to any one of claims 1 to 9, to select and forward them to further components of the secure backend and to forward data from the further components of the secure backend to the at least one user environment.

15. Secure backend according to claim 14, wherein the secure backend comprises a data storage which is designed in such a way that a third device of a user environment can gain access to the data storage via an access control model, and/or wherein the secure backend has a communication server which is connected to the dispatch server and which is designed in such a way that a third domain of a first user environment according to any one of claims 1 to 9 can communicate with a third domain of a second user environment according to any one of claims 1 to 9 via the communication server.

## Revendications

1. Environnement utilisateur pour utilisation dans une architecture réseau, comprenant :
un système d'exploitation à micro-noyau, un environnement d'exécution correspondant, et
plusieurs dispositifs, lesdits plusieurs dispositifs étant des secteurs et/ou des applications à micro-noyau créés par virtualisation et lesdits dispositifs étant isolés les uns des autres, où un premier dispositif est configuré pour fournir au moins un service isolé et donner accès audit au moins un service aux autres dispositifs,
où un deuxième dispositif présente un secteur ayant un système d'exploitation propre, configuré pour n'exécuter que des fonctions et programmes prédéfinis dans un mode utilisateur,
où un troisième dispositif présente un secteur configuré pour communiquer avec un serveur d'expédition externe dédié, et pour recevoir des demandes de communication d'un ou de plusieurs autres secteurs de l'environnement utilisateur et/ou d'une ou de plusieurs applications à micro-noyau, pour traiter des demandes d'expédition et les transmettre au serveur d'expédition, et recevoir du serveur d'expédition des réponses aux demandes d'expédition,
où un quatrième dispositif présente un système pare-feu, configuré pour empêcher toute communication entrante ou sortante de l'environnement utilisateur à l'exception de la communication via l'expéditeur, et
où un cinquième dispositif présente un secteur, configuré pour exécuter isolément chaque pilote de l'environnement utilisateur et mettre les services correspondants et/ou les interfaces de pilote à la disposition des autres composants de l'environnement utilisateur.

2. Environnement utilisateur selon la revendication 1, comprenant un sixième dispositif présentant un secteur, configuré pour exécuter isolément des opérations cryptographiques.

3. Environnement utilisateur selon la revendication 1 ou la revendication 2, comprenant un septième dispositif présentant un secteur disposant d'un système d'exploitation propre, configuré pour exécuter des fonctions et des programmes.

4. Environnement utilisateur selon l'une des revendications 1 à 3, où le quatrième dispositif est configuré pour exécuter des contrôles d'intégrité initiaux et/ou cycliques des dispositifs et/ou des composants des dispositifs.

5. Environnement utilisateur selon l'une des revendications 1 à 4, où les demandes d'expédition comprennent au moins une des informations suivantes :
- taille de charge utile,
- moment de transmission,
- émetteur de la communication,
- récepteur de la communication,
- auteur de la demande de communication à l'expéditeur,
- signature cryptographique.

6. Environnement utilisateur selon l'une des revendications 1 à 5, où le troisième secteur est configuré pour contrôler l'autorisation des dispositifs à communiquer via le troisième secteur.

7. Environnement utilisateur selon l'une des revendications 1 à 6, où le troisième secteur est configuré pour donner accès à une mémoire de données d'arrière-plan au moyen d'un modèle de contrôle d'accès.

8. Environnement utilisateur selon l'une des revendications 1 à 7, où le troisième secteur est configuré pour communiquer avec un troisième secteur d'un deuxième environnement utilisateur au moyen d'un serveur de communication d'arrière-plan relié au serveur d'expédition.

9. Environnement utilisateur selon l'une des revendications 1 à 8, où le troisième secteur est configuré pour accéder à un serveur Web relié au serveur d'expédition.

10. Architecture réseau, comprenant :
au moins un environnement utilisateur selon l'une des revendications précédentes, un arrière-plan sécurisé et un serveur d'expédition,
où le serveur d'expédition est configuré pour recevoir dudit au moins un environnement utilisateur des demandes d'expédition et des données entrantes, sélectionner celles-ci et les transmettre à des composants de l'arrière-plan sécurisé, et transmettre des données des composants de l'arrière-plan sécurisé audit au moins un environnement utilisateur, et
où l'arrière-plan sécurisé comprend un serveur d'accès à l'arrière-plan.

11. Architecture réseau selon la revendication 10, où le serveur d'expédition fait partie de l'arrière-plan sécurisé.

12. Architecture réseau selon la revendication 10 ou la revendication 11, où l'arrière-plan sécurisé comprend en outre une mémoire de données, prévue pour qu'un troisième dispositif de l'environnement utilisateur puisse accéder à la mémoire de données au moyen d'un modèle de contrôle d'accès.

13. Architecture réseau selon l'une des revendications 10 à 12, où ladite architecture réseau comprend au moins un premier et un deuxième environnement utilisateur selon l'une des revendications 1 à 9, et où l'arrière-plan sécurisé comprend un serveur de communication relié au serveur d'expédition et prévu pour qu'un troisième secteur du premier environnement utilisateur puisse communiquer avec un troisième secteur du deuxième environnement utilisateur via le serveur de communication.

14. Arrière-plan sécurisé destiné à être utilisé dans une architecture réseau, comprenant :
un serveur d'accès à l'arrière-plan, et
un serveur d'expédition configuré pour recevoir d'au moins un environnement utilisateur selon l'une des revendications 1 à 9 des demandes d'expédition et des données entrantes, sélectionner celles-ci et les transmettre à des composants de l'arrière-plan sécurisé, et transmettre des données des autres composants de l'arrière-plan sécurisé audit au moins un environnement utilisateur.

15. Arrière-plan sécurisé selon la revendication 14, où l'arrière-plan sécurisé comprend une mémoire de données, prévue pour qu'un troisième dispositif de l'environnement utilisateur puisse accéder à la mémoire de données au moyen d'un modèle de contrôle d'accès, et/ou où l'arrière-plan sécurisé comprend un serveur de communication relié au serveur d'expédition et prévu pour qu'un troisième secteur d'un premier environnement utilisateur selon l'une des revendications 1 à 9 puisse communiquer avec un troisième secteur d'un deuxième environnement utilisateur selon l'une des revendications 1 à 9 via le serveur de communication.
